# EUROPEAN PATENT SPECIFICATION

(11) **EP 3 406 137 B1**
(45) Date of publication and mention of the grant of the patent: **27.10.2021**
(21) Application number: 18172673.8
(22) Date of filing: 16.05.2018
(51) Int. Cl.: A01M 7/00, B05B 9/08, B05B 9/04

(54) **DOSING DEVICE**
DOSIERUNGSVORRICHTUNG
DISPOSITIF DE DOSAGE

(30) Priority: 22.05.2017 IT 201700055422
(43) Date of publication of application: 28.11.2018
(73) Proprietor: Cooperativa Sociale la Pieve - Societa' Cooperativa - Onlus, 48124 San Michele (RA) (IT)
(72) Inventor: BALDRATI, Idio, 48123 CONVENTELLO (RA) (IT); PORTALE, Francesco, 48125 RAGONE (RA) (IT); PORTALE, Salvatore, 48122 PUNTA MARINA (RA) (IT)
(74) Representative: Roncuzzi, Davide

(56) References cited:
- EP-A1- 0 291 332
- WO-A1-2016/083910
- US-A- 4 197 872
- US-A- 5 381 962

## Description

The present invention relates to a dosing system. In particular, the present invention relates to a dosing system so designed as to supply a liquid inside environments of limited extension. In more detail, the present invention relates to a dosing system so designed as to supply a liquid inside environments of limited extension in a calibrated manner.

### BACKGROUND TO THE INVENTION

In the field of insect disinfestation and control, the use of organic or inorganic substances is well known; these substances can be natural or synthesized, and shall have toxic action so as to kill the insects or to affect their life, for example to prevent the proliferation thereof or to determine conditions preventing the proliferation thereof.

In case the target of disinfestation is the tiger mosquito, as well as for any other species of insects, a strategy is deemed adequate to prevent the diffusion thereof if it takes into account the respective habits. In particular, the female tiger mosquito, as well as the female of other similar species, tend to lay eggs in so-called breeding sites, that are usually dark places of limited extension similar to the tree cavities the tropical forest they come from. In anthropized environments, tiger mosquitoes prefer small containers where water is collected, even if the eggs can resist drought even for six months. Anyway, the eggs shall be submerged in water in order to hatch so as to start the larval cycle. For this reason, fighting the tiger mosquito or other species with similar breeding sites, is very effective if done with larvae killing pesticides distributed in the catch basins arranged along the roads and accessible through respective trap-doors, and in private areas such as buildings or houses, in ponds, tree cavities and similar environments or simply in a system pot or a system pot saucer.

Among the most effective larvae killing insecticides there are oily pesticides forming a film on the water surface to be treated altering the surface tension thereof and thus preventing larvae and pupae from breathing above the water surface. The amount singularly necessary for larvae killing effect in environments of limited dimensions, such as the catch basins, are in the order of 1/5 cc for each dispensing dose. These products do not kill larvae and pupae by means of chemical or biological poisoning, but by means of a physical change in the environment where they live; therefore, insecticide resistance among mosquitoes does not occur, as instead is often the case when using chemical products. The mosquito larvae killing insecticides are biocompatible for both humans and animals, have low environmental impact as they do not have intrinsic toxicity, but are very expensive; for this reason, it is necessary not to waste them also for maximizing the number of treatments with a single charge of the tank and the hourly yield of the operators every time they exit for intervention. For dispensing these pesticides, portable systems are usually used, which are provided with a pesticide tank hydraulically connected to a pipe provided with a dispenser and supplied by an electrically actuated pump taking the liquid from the tank. The operator brings the system inside a rucksack, in order to simplify the transport thereof as the insecticide shall be dispensed in a geographically precise point, i.e. the treatment shall be "punctual". The pipe comprises an elongated tubular member provided with a handle for moving it; the dispenser is usually constituted by a nozzle carried by the tubular member in intermediate position between the free end of the tubular member and the pipe handle. A switch carried by the handle actuates the pump, thus causing the liquid to be taken and to be supplied to the tubular member. In particular, the pump causes an over-pressure of the liquid in the tubular member so as to allow the exit thereof through the dispenser. Moreover, the insecticide shall be applied regularly according to the duration of the larvae killing effect, in order to limit, given the same treatment effectiveness, the product consumption and the time of the operators involved in treatments. Systems as that described above do not allow to maximize this aspect of the treatment as they are conceived for small/medium scale interventions. Moreover, in order to limit the number of fillings of the liquid tank, this latter shall be adequately dimensioned, this resulting in an excessive load on the operators' shoulders, and therefore in a greater risk of injuries for the operators performing for mosquito control with systems like those described above.

Moreover, due to the manual control of the pump through the switch it is difficult to dose the liquid in a calibrated manner. Moreover, the over-pressure of the liquid - with respect to the outer pressure - generated by the pump in the tubular member is not generated by the pump is not immediately eliminated as the switch is actuated, and therefore the liquid continues to exit from the dispenser, and a portion thereof is wasted after each treatment, a portion that represents a significant percentage of the total amount as the total amount to be dispensed is very reduced, as mentioned above. Moreover, the dispensing operations are slowed down due to the choice of the position of the dispensing nozzle, that does not ensure a correct treatment of some types of trap doors unless you remove the covers of the trap doors so as to dispense the liquid directly on the water surface inside the catch basins. Therefore, the use of such a system to dispense an insecticide like that described above have some drawbacks, some of which cause excessive costs for supplying the product and the need for having liquid tanks that are over-sized with respect to those that would be necessary if there would be no liquid lacks, as well as the prolonged intervention time necessary for some types of trap doors.

A further important aspect is the safety of users of roads and private areas where the interventions shall be performed; in fact, the oily substance dripping on the ground represents a risk for safety, as it can cause slipping and sliding, with possible serious negative effects.

In view of what described above, the problem of performing mosquito and larvae killing treatments using calibrated amounts of insecticide liquid without wastes due to the liquid dripping from the dispenser, without affecting the physical safety of the operators and the users of the areas subjected to the intervention, and allowing to precisely control the periodicity of application in given points and the consequent treatment effectiveness is currently unsolved and represents and interesting challenge for the Applicant.

Examples of dosing systems according to the prior art are known from EP 0291332 and US 5381962.

### SUMMARY OF THE PRESENT INVENTION

The present invention relates to a dosing system according to claim 1, further embodiments of the system according to the present invention being defined by the dependent claims. In particular, the present application relates to a dosing system so designed as to supply a liquid inside environments of limited extension. In more detail, the present application relates to a dosing system so designed as to supply a liquid inside environments of limited extension in a calibrated manner.

The object of the invention is to provide a dosing system for dosing mosquito control products that is simple and economical and allows to overcome the drawbacks illustrated above.

### BRIEF DESCRIPTION OF DRAWING

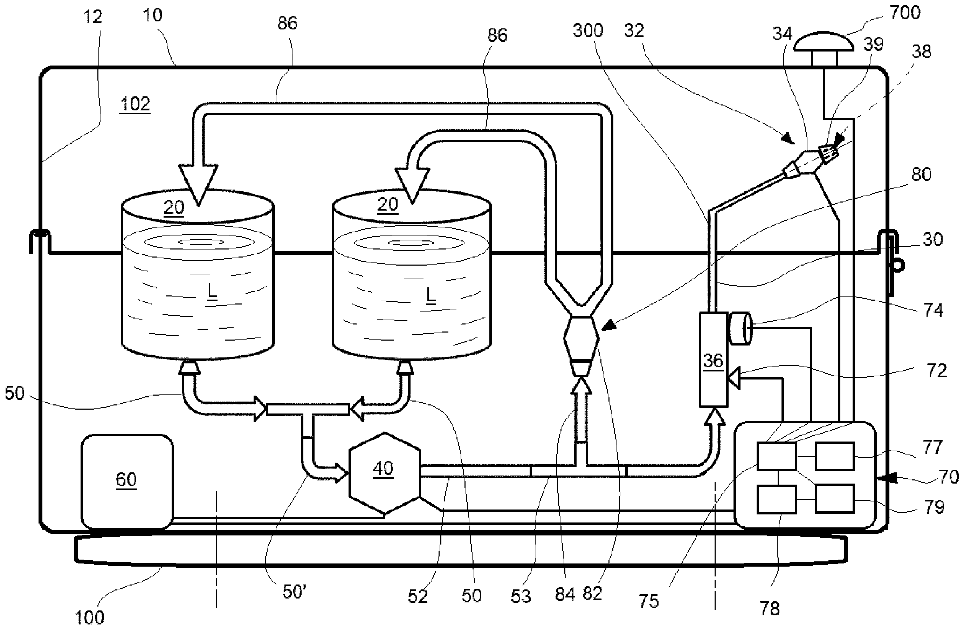

Further characteristics and advantages of the dosing system of the invention will be more apparent from the description below, set forth with reference to the attached drawings, that illustrate at least one non-limiting embodiment, where identical or corresponding parts of the device are identified by the same reference numbers. In particular:
- the attached figure shows a block diagram of a dosing system according to the present application.

### DETAILED DESCRIPTION OF THE PRESENT INVENTION

In the attached figure, number 1 indicates, as a whole, a dosing system for dosing a liquid L. The system 1 comprises a container 10 provided with a space 12 containing at least one tank 20 for the liquid L.

The system further comprises a dispensing member 32 that i hydraulically connected to the at least one tank 20 and is supplied, in use, by a pump 40, which is electrically actuated and is hydraulically connected to the at least one tank 20 through a supply pipe 50 and to the dispensing member 32 through a dispensing pipe 52. The system 1 further comprises a power supply unit 60, which is electrically connected to the pump 40 for the actuation thereof; a control unit 70 electrically connected to the power supply unit 60 and electronically connected to the pump 40 in order to control the operation thereof as regards use time and liquid flow rate. The dispensing member 32 comprises an injector 34 electrically connected to the power supply unit 60 and electronically connected to the control unit 70. The object of the injector 34, derived from the automotive industry, is to dose the liquid L in a calibrated manner and to optimize the consumption of liquid L, so as to prevent it from dripping from the dispensing member 32, and therefore to dose the liquid L in a calibrated manner at every supply, without waste and without the risk of dirtying the ground. It should be specified that the electronic connections between the components of the control unit 70, that will be described above, have been omitted in the attached figure due to drawing economy, without this jeopardizes the understanding of the invention and the applications thereof.

The dispensing member 32 comprises a pipe 30 provided with a tubular rigid duct 300 and with a handle 36 for holding and moving the tubular duct 300. The tubular duct 300 carries the injector 34 in end position so as to facilitate the orientation thereof and therefore to achieve even cavities to be sprayed of minimum extension and accessible only by the injector 34. It is easily understood that this configuration of the dispensing member 32 allows to overcome the access difficulties typical of some types of trap-doors.

The control unit 70 comprises a switch 72 electronically connected to the pump 40 and a measuring device 74 for measuring the pressure at which the liquid L is supplied to the injector 34. The switch 72 and the measuring device 74 are carried by the handle 36 and comprise a pressure gauge 74 hydraulically connected to the dispensing pipe 52. As the injector 34 has been derived from the automotive industry, it is so designed as to be actuated, in use, by an electronic pulse received by the control unit 70, and it is therefore controlled by means of the switch 72.

The injector 34 has a nozzle 38 that is normally closed and can be opened in timing manner by means of an electronic control given by the control unit 70; the nozzle 38 is contained inside a protective sleeve 39 carried by the tubular duct 300.

In particular, in the attached figure the system 1 is provided with two tanks 20, without however limiting the scope of the present invention. The number of tanks is chosen according to the use of the system 1, i.e. it depends on the volume of liquid L that shall be dispensed every time the operator exit for interventions using the same system, and on the maximal weight the operator can bear and on the transport device of the system 1. To each tank 20 corresponds a supply pipe 50 and the two supply pipes 50 join together in a T-joint 54 that, in turn, ends in a supply pipe 50' of the pump 30.

According to the attached figure, the system 1 comprises a limiting device 80 for limiting the pressure at which the liquid L is supplied upstream of the injector 34, and therefore in the dispensing pipe 52 and in the tubular duct 300. The limiting device 80 comprises a 2-ways flow rate adjusting member 82 that is hydraulically connected to the dispensing pipe 52 through a T-joint 53 and a service duct 84. The limiting member 82 is therefore suitable to supply each tank 20 with liquid L through a recovery pipe 86. As each tank 20 is in aerial communication with the surrounding environment, if, in use, the injector 34 is in closing configuration (with a known, and therefore not shown, needle or a functionally equivalent mechanical closing element) and the pressure in the dispensing pipe 52, in the tubular duct 300 and in the injector 34 is greater than the atmospheric pressure in the tanks 20, the liquid L could have a low-pressure escape route towards each tank 20 through the service duct 84, the flow rate adjusting member 82 and the two recovery pipes 86.

The control unit 70 comprises a processing unit 75 to which a meter 77 is associated for measuring the absolute and the relative time, i.e. Essentially a digital clock, a memory card 78, and a geolocation device 79. These components can be used individually or in combination in order to determine the duration and to associate a given geographical position to the actuation of the pump 30, and therefore of the injector 34, in real time or not. According to its configuration, the control unit 70 allows to track information related to date, time, location and duration of each actuation of the switch 72 and therefore of the injector 34.

The use of the system 1 is clearly apparent from the description above and does not require further explanations. For the sake of practicality it could be useful to specify that the processing unit 75, the timer 77, the memory card 78 and the geolocation device 79 have been represented, in the attached figure, as an integral part of the control unit 70, intended as a single electronic board, without however this solution limits the protective scope of the invention. Actually, absolutely equivalent from a functional viewpoint is an embodiment where these components are distinct from one another and globally contained in the container 10, where they are electronically connected together for operating.

In particular, it should be specified that the container 10 may be configured at will, and, in particular it can be box-shaped and it can be provided, at the bottom, with a base 100 provided with a plurality of holes for coupling to a transport surface, known and therefore not shown, of a bike or a motorbike or of a carriage pulled manually, so as not to weigh on the user's shoulders and to make the larvae killing treatment practical and safe. Moreover, the container 10 may be closed at the top by a lid that can be removed, or be hinged as in the attached figure, so that the space 12 can be easily inspected and the tank 20 can be filled.

The control unit 70 also comprises an emergency button 700, for the sake of practicality shaped like a mushroom on in any other manner, that can be used in case of malfunction of the system or for any other reason requiring to immediately stop dispensing the insecticide. The button 700 is carried by the lid 102, at the top thereof.

Lastly, it is clearly apparent that variants and modifications can be done to the system 1 described and illustrated herein without however departing from the protective scope of the invention as defined by the claims.

In view of what described above, the use of a insecticide dispensing system like that described above allows exactly to calibrate the liquid to be used for every localized application and to avoid wastes due to dripping liquid, and therefore to reduce the costs due to wastes; consequently, it allows to limit the volume of the insecticide liquid tanks, the number of necessary fillings and, thanks to the fact that the operators shall no longer bring significant weights, it allows the operators to perform a higher number of application in the course of a single intervention exit given the same capacity of the tank contained in the system, thus overcoming the access difficulties typical of certain types of trap doors, and therefore optimizing the daily operativeness. The use of the system 1 described above is also particularly advantageous when the liquid to be dispensed is oily. In fact, the use of a dispensing member 32 provided with an injector 34 prevents the liquid from dripping and therefore from dirtying the ground around the intervention area, eliminating the risk for the operators and the users of accidental slipping and falling. The possibility of tracing the places where the treatment is performed and to associated a geographical geolocation of each area allows to avoid to perform the treatment again before the insecticide effect is statistically finished, allowing to prove the actual performance *a-posteriori.*

In view of what described above, the problem of performing larvae killing treatments against tiger mosquito and other similar species using the same breeding sites, using calibrated amounts of insecticide liquids without wastes due to liquid dripping from the dispenser, without risk for the physical safety of the operators and allowing to control the periodicity of applications in given points is currently solved by the Applicant.

## Claims

1. Dosing system for dosing a liquid (L), said system (1) comprising at least one tank (20) for said liquid (L); a dispensing member (32) hydraulically connected to said at least one tank (20) and supplied, in use, by a pump (40) electrically actuated and hydraulically connected to said at least one tank (20) through a supply pipe (50) and to said dispensing member (32) through a dispensing pipe (52); power supply means (60) electrically connected to said pump (40) for the actuation thereof; control means (70) electrically connected to said power supply means (60) and electronically connected to said pump (40) in order to control the operation thereof; wherein said dispensing member (32) comprises an injector (34) electrically connected to said power supply means (60) and electronically connected to said control means (70) in order to dose said liquid (L) in a calibrated manner, wherein said injector (34) is so designed as to be actuated, in use, by an electronic pulse received by said control means (70), wherein said dispensing member (32) comprises a pipe (30) provided with a tubular rigid duct (300) carrying said injector (34) in end position, wherein said control means (70) comprise a switch (72) electronically connected to said pump (40) and measuring means (74) for measuring the supply pressure of said liquid (L) to said injector (34); wherein said pipe (30) being provided with a handle (36) to grip said rigid duct (300) and handle it; said switch (72) and said measuring means (74) being associated with said handle (36), **characterized in that** said injector (34) is so designed as to be controlled by said switch (72), and **in that** said injector (34) has a nozzle (38) usually closed that can be opened in a timed manner through an electronic control; said nozzle (38) being contained inside a protective sleeve (39) carried by said rigid duct (300).

2. System according to claim 1, **characterized in that** said pressure measuring means (74) comprise a manometer (74) hydraulically connected to said dispensing pipe (52).

3. System according to any one of the previous claims, **characterised by** comprising pressure relief means (80) in said dispensing pipe (52).

4. System according to claim 3, **characterized in that** said pressure relief means (80) comprise a flow rate adjusting member (82) hydraulically connected to said dispensing pipe (52) and to said at least one tank (20) through a recovery pipe (84).

5. System according to any one of the previous claims, **characterized by** comprising two said tanks (20), each of which being hydraulically connected to said flow rate adjusting member (82) through a 2-way diverter (24) and to said dispensing pipe (52) through a T-fitting (54).

6. System according to any one of the previous claims, **characterized in that** said control means (70) comprise a processing unit (75) integrating a time measurer (77) and a memory unit (78).

7. System according to claim 6, **characterized in that** said control means (70) comprise a geolocation device (79) connected to said memory unit (78) in order to associate a geographic position to each activation of said switch (72) of said injector (34).

8. System according to any one of the previous claims, **characterised in that** said power supply means (60) are of the rechargeable type.

9. System according to any one of the previous claims, **characterized in that** said container (10) is box-shaped and is provided with a base (100) that can be closed with a lid (102).

10. System according to claim 9, **characterized in that** said control means (70) comprise an emergency switch (700) carried by said lid (102).

## Patentansprüche

1. Dosiersystem zur Dosierung einer Flüssigkeit (L), wobei das genannte System (1) umfasst: mindestens einen Tank (20) für die genannte Flüssigkeit (L); ein Abgabeelement (32), das hydraulisch mit dem genannten mindestens einen Tank (20) verbunden ist und, im Gebrauch, von einer Pumpe (40) versorgt wird, die elektrisch betätigt wird und hydraulisch mit dem genannten mindestens einen Tank (20) durch ein Zufuhrrohr (50) und mit dem genannten Abgabeelement (32) durch ein Abgaberohr (52) verbunden ist; Stromzufuhrmittel (60), die elektrisch mit der genannten Pumpe (40) zur Betätigung davon verbunden sind; Steuermittel (70), die elektrisch mit den genannten Stromzufuhrmitteln (60) verbunden sind und elektronisch mit der genannten Pumpe (40) verbunden sind, um den Betrieb davon zu steuern; wobei das genannte Abgabeelement (32) einen Injektor (34) umfasst, der elektrisch mit den genannten Stromzufuhrmitteln (60) verbunden ist und elektronisch mit den genannten Steuermitteln (70) verbunden ist, um die genannte Flüssigkeit (L) in einer kalibrierten Weise zu dosieren, wobei der genannte Injektor (34) derart ausgebildet ist, dass er, im Gebrauch, durch einen elektronischen Impuls betätigt wird, der durch die genannten Steuermittel (70) empfangen wird, wobei das genannte Abgabeelement (32) ein Rohr (30) umfasst, das mit einem rohrförmigen starren Kanal (300) versehen ist, der den genannten Injektor (34) in einer Endposition trägt, wobei die genannten Steuermittel (70) einen Schalter (72), der elektronisch mit der genannten Pumpe (40) verbunden ist, und Messmittel (74) zur Messung des Zufuhrdrucks der genannten Flüssigkeit (L) in den genannten Injektor (34) umfassen; wobei das genannte Rohr (30) mit einem Handgriff (36) versehen ist, um den genannten starren Kanal (300) zu ergreifen und handzuhaben; wobei der genannte Schalter (72) und die genannten Messmittel (74) mit dem genannten Handgriff (36) assoziiert sind, **dadurch gekennzeichnet, dass** der genannte Injektor (34) derart ausgebildet ist, dass er von dem genannten Schalter (72) gesteuert wird, und dadurch, dass der genannte Injektor (34) eine üblicherweise geschlossene Düse (38) aufweist, die in einer zeitlich gesteuerten Weise durch eine elektronische Steuerung geöffnet werden kann; wobei die genannte Düse (38) innerhalb einer Schutzmanschette (39) enthalten ist, die von dem genannten starren Kanal (300) getragen wird.

2. System nach Anspruch 1, **dadurch gekennzeichnet, dass** die Druckmessmittel (74) ein Manometer (74) umfassen, das hydraulisch mit dem genannten Abgaberohr (52) verbunden ist.

3. System nach einem der vorhergehenden Ansprüche, **dadurch gekennzeichnet, dass** es Druckentlastungsmittel (80) in dem genannten Abgaberohr (52) umfasst.

4. System nach Anspruch 3, **dadurch gekennzeichnet, dass** die genannten Druckentlastungsmittel (80) ein Durchflussraten-Einstellelement (82) umfassen, das hydraulisch mit dem genannten Abgaberohr (52) und mit dem genannten mindestens einen Tank (20) durch ein Rückgewinnungsrohr (84) verbunden ist.

5. System nach einem der vorhergehenden Ansprüche, **dadurch gekennzeichnet, dass** es zwei genannte Tanks (20) umfasst, von denen jeder hydraulisch mit dem genannten Durchflussraten-Einstellelement (82) durch einen 2-Weg-Ablenker (24) und mit dem genannten Abgaberohr (52) durch ein T-Anschlussstück (54) verbunden ist.

6. System nach einem der vorhergehenden Ansprüche, **dadurch gekennzeichnet, dass** die genannten Steuermittel (70) eine Verarbeitungseinheit (75) umfassen, die einen Zeitmesser (77) und eine Speichereinheit (78) integriert.

7. System nach Anspruch 6, **dadurch gekennzeichnet, dass** die genannten Steuermittel (70) eine Geolokalisationsvorrichtung (79) umfassen, die mit der genannten Speichereinheit (78) verbunden ist, um eine geografische Position mit jeder Aktivierung des genannten Schalters (72) des genannten Injektors (34) zu assoziieren.

8. System nach einem der vorhergehenden Ansprüche, **dadurch gekennzeichnet, dass** die genannten Stromzufuhrmittel (60) vom wiederaufladbaren Typ sind.

9. System nach einem der vorhergehenden Ansprüche, **dadurch gekennzeichnet, dass** der genannte Behälter (10) kastenförmig ist und mit einer Basis (100) versehen ist, die mit einem Deckel (102) verschlossen werden kann.

10. System nach Anspruch 9, **dadurch gekennzeichnet, dass** die genannten Steuermittel (70) einen Notschalter (700) umfassen, der von dem genannten Deckel (102) getragen wird.

## Revendications

1. Système de dosage pour doser un liquide (L), ledit système (1) comprenant au moins un réservoir (20) pour ledit liquide (L); un élément de distribution (32) connecté hydrauliquement audit au moins un réservoir (20) et alimenté, en utilisation, par une pompe (40) actionnée électriquement et connectée hydrauliquement audit au moins un réservoir (20) par l'intermédiaire d'un tuyau d'alimentation (50) et audit élément de distribution (32) par l'intermédiaire d'un tuyau de distribution (52); des moyens d'alimentation électrique (60) connectés électriquement à ladite pompe (40) pour l'actionnement de celle-ci; des moyens de commande (70) connectés électriquement auxdits moyens d'alimentation électrique (60) et connectés électroniquement à ladite pompe (40) de façon à commander le fonctionnement de celle-ci; dans lequel ledit élément de distribution (32) comprend un injecteur (34) connecté électriquement auxdits moyens d'alimentation électrique (60) et connecté électroniquement auxdits moyens de commande (70) de façon à doser ledit liquide (L) d'une manière calibrée, dans lequel ledit injecteur (34) est conçu de façon à être actionné, en utilisation, par une impulsion électronique reçue par lesdits moyens de commande (70), dans lequel ledit élément de distribution (32) comprend un tuyau (30) muni d'un conduit rigide tubulaire (300) portant ledit injecteur (34) en position d'extrémité, dans lequel lesdits moyens de commande (70) comprennent un commutateur (72) connecté électroniquement à ladite pompe (40) et des moyens de mesure (74) pour mesurer la pression d'alimentation dudit liquide (L) audit injecteur (34); dans lequel ledit tuyau (30) est muni d'un manche (36) pour saisir ledit conduit rigide (300) et manipuler celui-ci; ledit commutateur (72) et lesdits moyens de mesure (74) sont associés audit manche (36), **caractérisé par le fait que** ledit injecteur (34) est conçu de façon à être commandé par ledit commutateur (72), et **par le fait que** ledit injecteur (34) a une buse (38) habituellement fermée qui peut être ouverte de manière temporisée par l'intermédiaire d'une commande électronique; ladite buse (38) est contenue à l'intérieur d'un manchon de protection (39) porté par ledit conduit rigide (300).

2. Système selon la revendication 1, **caractérisé par le fait que** lesdits moyens de mesure de pression (74) comprennent un manomètre (74) connecté hydrauliquement audit tuyau de distribution (52).

3. Système selon l'une quelconque des revendications précédentes, **caractérisé par le fait qu'**il comprend des moyens limiteurs de pression (80) dans ledit tuyau de distribution (52).

4. Système selon la revendication 3, **caractérisé par le fait que** lesdits moyens limiteurs de pression (80) comprennent un élément d'ajustement de débit (82) connecté hydrauliquement audit tuyau de distribution (52) et audit au moins un réservoir (20) par l'intermédiaire d'un tuyau de récupération (84).

5. Système selon l'une quelconque des revendications précédentes, **caractérisé par le fait qu'**il comprend deux réservoirs précités (20), dont chacun est connecté hydrauliquement audit élément d'ajustement de débit (82) par l'intermédiaire d'un partiteur à 2 voies (24) et audit tuyau de distribution (52) par l'intermédiaire d'un raccord en T (54).

6. Système selon l'une quelconque des revendications précédentes, **caractérisé par le fait que** lesdits moyens de commande (70) comprennent une unité de traitement (75) intégrant un mesureur de temps (77) et une unité de mémoire (78) .

7. Système selon la revendication 6, **caractérisé par le fait que** lesdits moyens de commande (70) comprennent un dispositif de géolocalisation (79) connecté à ladite unité de mémoire (78) de façon à associer une position géographique à chaque activation dudit commutateur (72) dudit injecteur (34).

8. Système selon l'une quelconque des revendications précédentes, **caractérisé par le fait que** lesdits moyens d'alimentation électrique (60) sont du type rechargeable.

9. Système selon l'une quelconque des revendications précédentes, **caractérisé par le fait que** ledit récipient (10) est en forme de boîte et est muni d'une base (100) qui peut être fermée par un couvercle (102).

10. Système selon la revendication 9, **caractérisé par le fait que** lesdits moyens de commande (70) comprennent un commutateur d'urgence (700) porté par ledit couvercle (102) .
